# NEW EUROPEAN PATENT SPECIFICATION

(11) **EP 2 293 920 B2**
(45) Date of publication and mention of the opposition decision: **30.09.2020**
(45) Mention of the grant of the patent: 31.10.2012
(21) Application number: 09749542.8
(22) Date of filing: 04.05.2009
(51) Int. Cl.: B29C 53/56, F16L 59/02, F16L 59/14

(54) **PIPE SECTION AND METHOD FOR ITS PRODUCTION**
ROHRSTÜCK UND HERSTELLUNGSVERFAHREN DAFÜR
SECTION DE TUYAU ET SON PROCÉDÉ DE PRODUCTION

(30) Priority: 23.05.2008 EP 08251818
(43) Date of publication of application: 16.03.2011
(73) Proprietor: Rockwool International A/S, 2640 Hedehusene (DK)
(72) Inventor: ROSENBERG, Gorm, DK-4295 Stenlille (DK)
(74) Representative: Gill Jennings & Every LLP
(86) International application number: PCT/EP2009/003172
(87) International publication number: WO 2009/141052

(56) References cited:
- WO-A-97/48932
- DD-A- 33 880
- DE-C1- 3 536 174
- US-A- 3 346 016
- US-A- 6 068 882
- US-A1- 2007 173 157

## Description

This invention relates to the use of dried gel products, commonly known as aerogels, xerogels and cryogels. These products are known to have excellent insulating properties, owing to their very high surface areas, high porosity and relatively large pore volume. They are manufactured by gelling a flowable sol-gel solution and then removing the liquid from the gel in a manner that does not destroy the pores of the gel.

Depending on the drying conditions, aerogels, xerogels or cryogels can be made. Where the wet gel is dried at above the critical point of the liquid, there is no capillary pressure and therefore relatively little shrinkage as the liquid is removed. The product of such a process is very highly porous and is known as an aerogel. On the other hand, if the gel is dried by evaporation under subcritical conditions, the resulting product is a xerogel composite. Although shrinkage is unhindered in the production of a xerogel, the material usually retains a very high porosity and a large surface area in combination with a very small pore size.

When the gel is dried in a freeze-drying process, a cryogel is obtained.

These conventional aerogel, xerogel and cryogel products, although good insulators, are fragile, susceptible to cracking and require a long processing time.

Therefore, more particularly, the invention relates to the use of aerogel, xerogel or cryogel products, which additionally comprise a matrix of fibres, the matrix serving to reinforce the material. These materials are known as aerogel, xerogel and cryogel matrix composites and are commonly produced in the form of mats, which are typically manufactured by impregnating the reinforcing fibres with a flowable sol-gel solution, gelling and then removing the liquid from the gel in a manner that does not destroy the pores of the gel. Supercritical drying, subcritical drying and freeze-drying result respectively in aerogel, xerogel and cryogel matrix composites.

Aerogel, xerogel and cryogel matrix composites are mechanically strong, good insulators and require a shorter processing time. They are, therefore, far more suitable for industrial use as insulating material and are commonly used for this purpose. For example, US 2002/0094426 describes aerogel matrix composites and their use for insulation purposes.

The present invention relates, more particularly, to insulation products for pipes comprising aerogel, xerogel or cryogel matrix composites.

Previous attempts to insulate pipes with aerogel, xerogel or cryogel matrix composites have suffered from a number of disadvantages. Firstly, it is possible, as disclosed in a number of "case studies" on the website of Aspen Aerogels, Inc., to insulate pipes by wrapping a flat aerogel or cryogel matrix composite mat around the pipe in situ. The mat may be secured around the pipe, in some cases, using adhesive.

Whilst supplying the insulation mat in a flat form to be wrapped around the pipe *in situ* is efficient in terms of packaging for storage and transport, it suffers from the disadvantage that wrapping the insulation mat *in situ* is inconvenient and requires a significant amount of manual labour. Furthermore, in the case of pipes of a small diameter or where the mat is particularly inflexible, the process of wrapping and securing the mat may be hindered.

Therefore, an object of the present invention is to provide an aerogel, xerogel or cryogel matrix composite insulation that is pre-formed as a pipe section and easily installed onto the pipe to be insulated. A further object of the invention is to provide a method for making such an aerogel, xerogel or cryogel matrix composite pipe section.

WO 2008/011423 discloses a method for imparting curvature to an insulation mat that has been packed and shipped in a flat form. The mat, which is preferably an aerogel mat or an aerogel matrix composite mat, is placed in a "smart-bag" and vacuum sealed therein. The "smart-bag" is formed of at least two sheets of heat-shrinkable film, so that when heat is applied to the product, one of the films shrinks to a greater extent than the opposing film, thereby imparting curvature to the insulation mat.

Whilst this product helps the wrapping process to some extent, it would be impractical for particularly inflexible insulation mats and for applications on pipes of a small diameter. It also suffers from the disadvantage of the inconvenience of needing to apply heat directly prior to installing the insulation. The "smart bag" also increases the expense of production, particularly since uniaxial shrinkage of the film is strongly preferred.

Therefore a further object of the invention is to provide a method for producing an aerogel, xerogel or cryogel matrix composite pipe section that is economical and suitable for producing insulation for small diameter pipes. It is also an object of the invention to provide a method that is suitable for forming pipe sections from relatively inflexible aerogel, xerogel or cryogel matrix composite mats.

WO 97/48932 discloses an insulating system for pipes, wherein each pipe section is formed by two mating halves. The system includes at least two different type of pipe insulation. Aerogel and aerogel matrix composites are preferred materials for the inner layer of insulation. However, little teaching is provided as to how to form the aerogel or aerogel matrix composite into a half-pipe form.

Other publications describe rolling the mat as part of the production process of an aerogel matrix composite. For example in US 2005046086 continuous sol-gel casting methods are described, wherein the gelling process is carried out by rolling the mat in conjunction with a spacer layer and the drying process is carried out by rolling with a porous spacer layer. The final product of this process is a flat aerogel matrix composite mat.

US 2007/0004306 discloses thermal or acoustic insulation in the form of an aerogel matrix composition, which is flexible enough to be rolled up. One step in the production process can be to infuse aerogel with an existing product. The aerogel could be formed into another existing product, including spun bonded polyolefins like Tyvek® manufactured by Dupont or other products in a roll form. The final product, however, is not in the form of a pipe section for pipe insulation.

It is also known to apply uncured mineral fibres to a mandrel to form a pipe section, and then to cure the fibres to form an insulation product for pipes. It is known, for example, to make a pipe section from a mineral fibre fleece in WO2002/48599. The physical properties of mineral fibres, however, are quite different from those of aerogel, xerogel or cryogel matrix composites and the formation of a pipe section from these dried gel-fibre composites presents different problems.

Therefore, an object of the present invention is to provide a pre-formed aerogel, xerogel or cryogel matrix composite pipe section with excellent insulation properties, which is both easy to install and economic to produce and which is suitable for pipes of a small diameter and in cases where the aerogel, xerogel or cryogel matrix composite is relatively inflexible.

A further object of the present invention is to provide a method for producing an aerogel, xerogel or cryogel matrix composite pipe section from a mat, the process being economical and capable of using relatively inflexible mats and producing pipe sections which are easy to install and suitable for pipes of a relatively small diameter.

### Summary of the Invention

The above-mentioned problems are solved in the present invention by providing novel pipe sections and a method for making a pipe section. The method for making a pipe section comprises;
providing a mat formed of a fibre matrix impregnated with an aerogel, xerogel or cryogel, the mat having a first major face, a second major face opposing the first major face, a first edge defining a longitudinal direction, a second edge substantially parallel to the first edge, a third edge defining a transverse direction that is substantially perpendicular to the longitudinal direction and a fourth edge substantially parallel to the third edge, applying an adhesive to the first major face;
winding the mat around a mandrel to provide a wound mat having an inner surface defining an inner circumference and an outer surface defining an outer circumference and a longitudinal axis which is substantially perpendicular to the planes of the inner and outer circumferences and substantially parallel to the transverse direction of the mat; and
slicing the wound mat substantially radially between the outer surface and the inner surface to provide a cut extending in a direction substantially parallel to the longitudinal axis,
wherein the method additionally comprises providing as a component of the pipe section a layer that comprises mineral wool fibres and that does not comprise aerogel, xerogel or cryogel.

The novel pipe section according to the invention has an inner surface defining an inner circumference, an outer surface defining an outer circumference, with a longitudinal axis which is substantially perpendicular to the planes of the inner and outer circumferences, and comprises;
a wound mat comprising a matrix of fibres impregnated with an aerogel, xerogel or cryogel, having a first major face and a second major face opposing the first major face, the mat forming a continuous roll having at least a first layer and a second layer between the inner and outer surfaces of the pipe section;
an adhesive at the interface between the first major face of the part of the mat forming the first layer and the second major face of the part of the mat forming the second layer; and
a split, extending substantially radially between the inner surface and the outer surface and extending in a direction substantially parallel to the longitudinal axis of the pipe section, wherein the pipe section additionally has a layer that comprises mineral wool fibres and that does not comprise aerogel, xerogel or cryogel.

The invention also provides pipe sections obtainable by the method of the invention.

### Brief Description of the Drawings

Figure 1 depicts a mat suitable for use in the process and product of the present invention.
Figure 2 shows a schematic diagram of process steps used in the present invention.
Figure 3 shows an alternative embodiment of the application of adhesive to the composite mat.
Figure 4 shows a cross-sectional view of a pipe sectionused in the invention

### Detailed description of the Invention

The method of the invention is carried out using a mat formed of a matrix of fibres impregnated with an aerogel, xerogel or cryogel. These products are available commercially from, for example, Aspen Aerogels, Inc. under the trade names Cryogel^{™} and Pyrogel®. They are also disclosed in, for example, US Patent Publication No. 20020094426; US Patent No. 5,789,075; US Patent No. 5,306,555; US Patent No. 6,770,584; US Patent No. 6,479,416; US Patent No. 6,083,619; and US Patent No. 6,080,475.

The aerogel, xerogel or cryogel matrix composite is typically formed by impregnating a fibre matrix with a flowable sol-gel solution. Usually this is a silica-containing sol-gel solution, but suitable aerogels, xerogels and cryogels may also be based on alumina or other metal oxides suitable for the sol-gel technique. Aerogel, xerogel and cryogel matrix composites may also be made from organic precursors (e.g. as in US 5973015 and 6087407). In particular, US5086085 describes aerogels based on melamine formaldehyde condensates and US 4873218 describes aerogels based on resorcinol-formaldehyde condensates.

The composite is then gelled to form a fibre-gel composite. Finally, the fibre-gel composite is dried to form the aerogel, xerogel or cryogel matrix composite. More detailed descriptions of suitable methods can be found in US Patent Publication No. 20020094426; US Patent No. 5,789,075; US Patent No. 5,306,555; US Patent No. 6,770,584; US Patent No. 6,479,416; US Patent No. 6,083,619; and US Patent No. 6,080,475.

Where the fibre-gel composite is dried under supercritical conditions, very little shrinkage occurs and an aerogel matrix composite arises. Sub-critical drying results in a xerogel matrix composite and freeze-drying results in a cryogel matrix composite.

The very high porosity that results from supercritical drying conditions provides aerogel matrix composites with excellent insulation properties. Therefore, the matrix composite is preferably an aerogel matrix composite.

Furthermore, whilst all aerogel, xerogel and cryogel matrix composites are within the scope of the invention, the most favourable insulation properties are obtained with silica-based composites. Therefore, preferably the aerogel, xerogel or cryogel contains silica.

Most preferably, the mat is formed of a silica aerogel matrix composite.

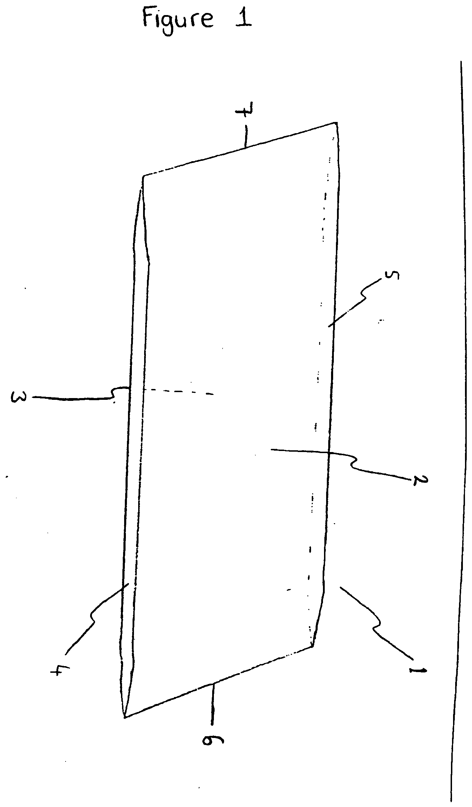

A suitable mat is depicted in Figure 1. The mat (1) has a first major face (2) and a second major face (3) opposing the first major face (2). It has a first edge (4) and a second edge (5), which is substantially parallel to the first edge (4). The first edge defines the longitudinal direction of the mat.

The mat also has a third edge (6), substantially perpendicular to the first edge (4) and the second edge (5), and a fourth edge (7) substantially parallel to the third edge (6). The third edge (6) defines the transverse direction of the mat.

It is preferable, as shown in Figure 1, for the third edge (6) and the fourth edge (7) to be tapered such that the thickness of the mat decreases at these edges. Where the third and fourth edges (6, 7) are tapered, a smoother pipe section may be formed from winding the mat as the edges will not form steps on the inner and outer surfaces of the wound mat. This, in turn, leads to a better fit around the pipe to be insulated and also to a pipe section with a more consistent thickness. The tapering may be applied from one side of the mat only or from both sides as shown in Figure 1.

The material of the fibres of the matrix may vary depending on the application and can include any suitable material, for example, the fibres may be inorganic fibres, such as glass fibres, mineral fibres (for example ceramic fibres) or carbon fibres; organic fibres, such as polyester fibres, polyolefin fibres (e.g. polypropylene fibres), polyamide fibres (e.g. aramide fibres), nylon fibres or melamine-formaldehyde fibres; or fibres of vegetable origin, and also blends thereof. The fibres can also be coated, for example polyester fibres can be metallized with a metal such as aluminium.

Preferably the mat (1) comprises polymer fibres, ceramic fibres, mineral wool fibres, carbon fibres or mixtures of these. Whilst polymer fibres provide a more flexible mat, ceramic and mineral wool fibres are more effective for fireproof applications.

In order that the mat has good insulating properties and mechanical strength, it is preferable that the diameter of the fibres is in the range 0.1 to 30 micrometres. More preferably, the diameter of the fibres is from 0.5 to 5 micrometres.

The mechanical strength of the mat is also affected by the length of the fibres. It is preferred according to the present invention that the length of the fibres is between 0.5 and 10cm. More preferably the length of the fibres is from 1 cm to 5cm.

The present invention is particularly advantageous when fireproof insulation is required for pipes of a relatively small diameter, because the method is capable of producing pipe sections from relatively inflexible aerogel, xerogel or cryogel matrix composites comprising ceramic or mineral wool fibres.

The method of the present invention is particularly suitable for mats of a certain flexibility. Where the mat is too stiff, the step of rolling the mat on a mandrel becomes difficult and a stronger adhesive is required. It is also possible that the process of winding might damage a particularly stiff mat.

On the other hand, when the mat is relatively inflexible it becomes difficult to apply the flat mat to the pipe by hand, as in the prior art. In these situations, the method and product of the present invention are particularly advantageous.

The aerogel, xerogel or cryogel matrix composite mats used in the present invention may be of any suitable thickness, but preferably have a thickness of from 3mm to 10mm and more preferably of from 3mm to 6mm. The method and product of the invention are particularly advantageous when using mats of these thicknesses, because these mats are generally flexible enough for the method of the invention to be performed easily but inflexible enough that the prior art method of wrapping the mat around the pipe *in situ* is hindered. Mats of these dimensions are also thin enough for the pipe section of a suitable thickness to be produced with a given number of layers. Where the thickness of the mat is too great, fewer layers of the mat are required for the wound mat. This may result in situations where the wound mat has, for example, one layer around a part of its circumference and two layers around the remainder of its circumference. This results in the pipe section, undesirably, having a high variation in its thickness around its circumference.

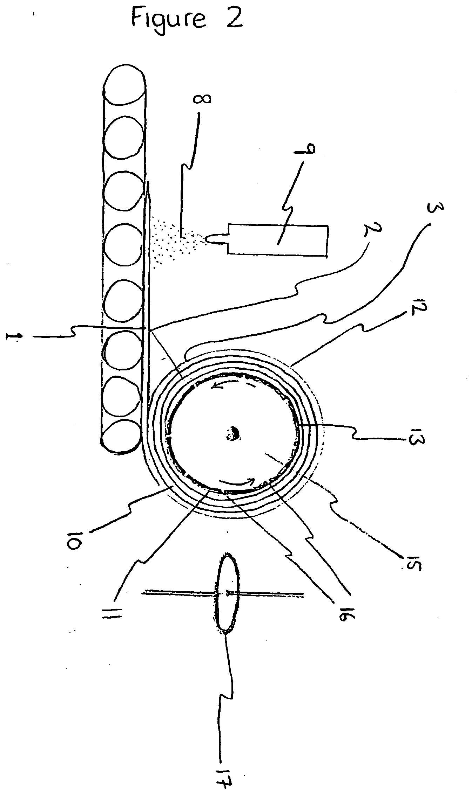

Figure 2 schematically depicts method steps of the present invention. The first step of the method of the invention is to provide a mat as described in relation to Figure 1. The second step of the method of the invention is to apply adhesive (8) to the first major face (2) of the of the aerogel, xerogel or cryogel matrix composite mat. The adhesive may be any adhesive capable of holding the mat in its wound form to provide a wound mat of the desired diameter.

The adhesive (8) may be applied, as shown in Figure 2, from an adhesive applicator (9). The adhesive (8) is preferably applied in the form of a spray. Alternatively, it may be applied in the form of a line or lines of adhesive, which is/are applied from the adhesive applicator (9) through a nozzle(s). Where the adhesive is applied in this manner, a line of adhesive is preferably substantially parallel to the longitudinal direction of the mat. This results in adhesive (8) being applied right up to the fourth edge (7) of the mat so that when the mat is wound, a secure wound mat (10) is formed, and the fourth edge (7) is securely fastened at the outer surface of the wound mat (10).

In order for the wound mat (10) to be secure once rolled, it is preferable to apply adhesive (8) to most of the first major face (2) of the mat that contacts the second major face (3) in the wound mat (10). Preferably the adhesive (8) is applied to at least 70%, more preferably 80% of the area of the first major face (2) of the mat that contacts the second major face (3) of the mat (1) when it is wound to form a wound mat (10).

In some embodiments, such as that shown in Figure 2, a part of the first major face (2) of the mat (1) forms the inner surface of the wound mat. In these cases, preferably, the adhesive (8) is not applied to the part of the first major face (2) that forms the inner surface (11) of the wound mat (10). This prevents the wound mat (10) from sticking to the mandrel (13).

Where the mat (1) is wound such that the first major face (2) forms the outer surface (12) of the wound mat (10), it may be preferable not to apply adhesive (8) to the part of the first major face that forms the outer surface (12) of the wound mat (10). On the other hand, it may be preferable, where a facing material is to be applied to the outer surface (12), to apply adhesive (8) to the part of the first major face (2) forming the outer surface (12) of the wound mat (10).

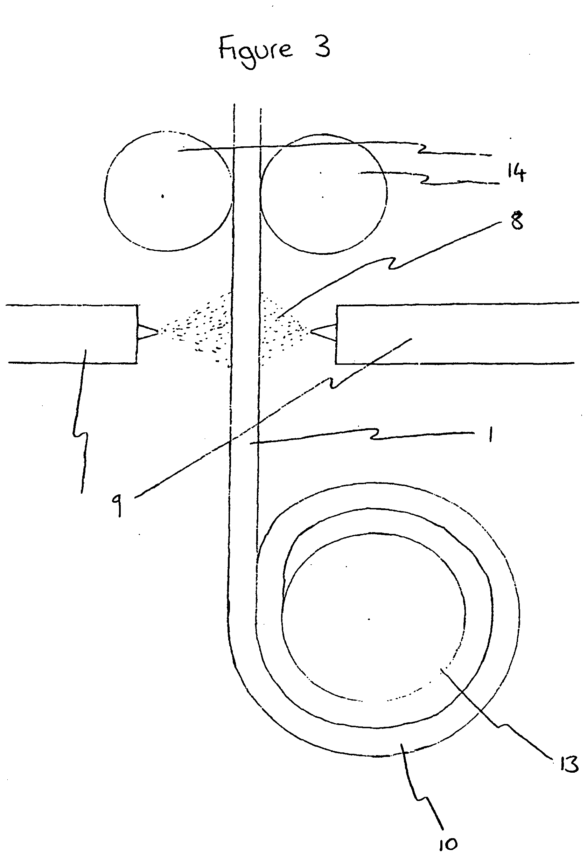

In some embodiments, an example of which is shown in Figure 3, adhesive is applied to both the first major face (2) and the second major face (3) of the mat (1), such that when the mat is wound, the contacting surfaces each have adhesive (8) applied to them. The aerogel, xerogel or cryogel matrix composite mat (1) is passed through rollers (14), often in a substantially vertical orientation as shown, and adhesive (8) is applied to the first major face (2) and the second major face (3) by the adhesive applicators (9). The mat (1) is then wound on the mandrel (13) to form the wound mat (10). This embodiment is particularly preferable when the pipe section to be made has a particularly small diameter, or the aerogel, xerogel or cryogel mat used as a starting material is particularly inflexible. In these situations, a contact adhesive is preferred so that it can be applied to each of the surfaces and can form bonds very quickly to fix the mat in its wound form once the surfaces are contacted. Where a contact adhesive is used, it may be preferable to allow the adhesive to dry for a period of time between the point of applying the adhesive and the point of winding the mat.

According to the method of the present invention and as shown in Figure 2, the aerogel, xerogel or cryogel matrix composite mat (1) is wound on a mandrel (13) to provide a wound mat (10), by means of rotating the mandrel about its own longitudinal axis. Preferably, the mandrel (13) is at least partially hollow and comprises holes (16) extending from the outer surface of the mandrel to the hollow space (15) within. An air pump may then pump air from the hollow space (15) in the mandrel (13) providing a suction at the holes (16) on the outer surface. In this way, the mat can be initially held on and wound on the mandrel (13).

It is possible for the mat (1) to be wound either such that the first major face (2) forms the inner surface (11) of the wound mat (10) or such that the second major face (3) of the mat (1) forms the inner surface (11) of the mat (1).

The diameter of the mandrel (13) controls the final diameter of the inner circumference of the pipe section and so corresponds to the diameter of the pipe onto which the pipe section is intended to be applied.

As the mat (1) is wound on the mandrel (13), it forms layers on the mandrel (13). In the embodiment shown in Figure 2 the first major face (2) of each layer makes contact with the second major face (2) of the layer directly inside it. In this way, the adhesive (8) on the first major face (2) of the mat (1) fixes the layers of mat together and secures the mat in its wound form. In the embodiment shown in Figure 2, the second major face (3) of the outer layer forms the outer surface (12) of the wound mat (10).

In order to provide a pipe section that is substantially uniform in its thickness, it is preferable that the step of winding the mat (1) on the mandrel (13) comprises rotating the mandrel (13) through not fewer than 2, more preferably not fewer than 3 complete rotations. However, because of the excellent insulating properties and preferred thickness of the mat (1), it is not usually necessary to rotate the mandrel (13) through more than 4 complete rotations.

The amount of time between application of the adhesive (8) to a part of the mat (1) and winding that part of the mat is dependent upon both the distance between the point of adhesive application and the mandrel, and upon the speed of winding. In a preferred embodiment the mat is wound on the mandrel at a speed such that the length of mat wound every second is from 10cm per second to 2m per second. More preferably, the speed of winding is between 30cm per second and 1 m per second. This allows a suitable amount of time between application of the adhesive (8) and winding the mat (1) without requiring a large amount of space between the point of adhesive application and the mandrel. It also gives an adequate production speed, without exerting excessive stresses on the mat (1) during the winding process.

In one embodiment, the method further comprises treating the wound mat (10) to smoothen its outer surface (12). This step usually comprises grinding the outer surface (12).

The method of the present invention comprises the step of slicing the wound mat (10) substantially radially between the outer surface (12) and the inner surface (11) to provide a cut (18) extending in a direction substantially parallel to the longitudinal axis. Slicing the wound mat (10) in this manner allows the completed pipe section to be applied quickly and easily as insulation to pipes. The wound mat (10) may be sliced using any suitable slicing means (17).

The present invention provides greater advantages for applications for pipes with a small diameter. In these cases, and especially when the mat is relatively inflexible, the methods of the prior art are especially difficult to carry out. In such cases, providing a method for forming a pre-formed pipe section for insulation rather than a flat mat is particularly advantageous. Therefore, in one embodiment of the invention, the diameter of the inner circumference of the wound mat (10) is not more than 100 mm, preferably not more than 70 mm, more preferably not more than 60 mm.

Once the wound mat (10) has been formed, it is possible to apply a facing material to the outer surface of the wound mat (10). The facing material imparts increased strength. It also helps to protect the pipe section from moisture, wear and dirt and makes the finished product more aesthetically pleasing and easier to work with. In some cases it also contributes to the insulation properties of the pipe section. In the present invention the facing material can be any suitable material, and in particular can be aluminium foil, which can be reinforced with glass fibres, aluminised foil, paper foil or polymer foil. Preferably the facing material is aluminium foil reinforced with glass fibres.

The method further comprises providing as a component of the pipe section a layer that comprises mineral wool fibres and that does not comprise aerogel, xerogel or cryogel. This layer may be provided inside or outside the part formed of the impregnated fibre matrix. For instance it may be provided as a pre-cured tubular section which is placed on the mandrel before the mat is wound. It is also envisaged that the wound mat (10) and mineral fibre wool layers could be formed separately and then one placed inside the other and preferably secured with adhesive to form the finished pipe section. The mineral fibres may be produced in the standard manner by pouring mineral melt one or more centrifugal spinners to form a cloud of fibres, adding curable binder to the cloud, carrying the cloud forwards from the spinner in a stream of air and collecting the cloud of fibres as a web on a substantially continuous moving collector. The web may then be applied to a mandrel before being cured.

The mineral fibre layer preferably has a density of from 10 kg/m³ to 250 kg/m³, more preferably from 40 to 150 kg/m³ and most preferably from 80 to 100 kg/m³.

In the method of the invention, the wound mat (10) is sliced substantially radially between its outer surface (12) and its inner surface (11) to provide a cut extending in a direction substantially parallel to the longitudinal axis. Any suitable means may be used to slice the wound mat (10), but preferably the mat is sliced with a rotating blade (17). Slicing the wound mat (10) facilitates the application of the pipe section to the pipe to be insulated.

The present invention also relates to a novel pipe section obtainable by the method of claim 1. This pipe section exhibits novel features which allow it to be manufactured as pre-formed aerogel, xerogel or cryogel matrix composite pipe section. The novel pipe section provides significant advantages over the prior art in terms of ease of manufacture, and ease of installation.

In addition, the wound mat may be cut in a direction substantially perpendicular to the longitudinal direction of the wound mat. In this manner a pipe section of any required length may be provided. This process is also helpful for squaring off the ends in cases where the mat (1) has been wound at a slight angle. Preferably, when the wound mat is cut, an oscillating or rotating blade is used.

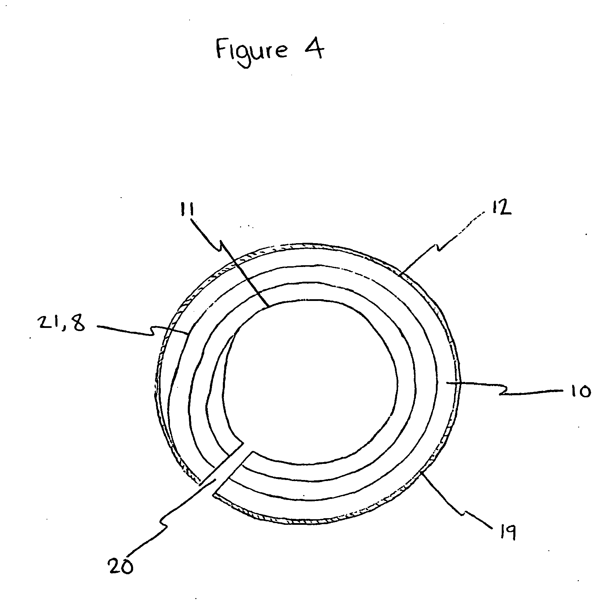

The present invention also provides a novel pipe section according to claim 10. One embodiment of an insulating pipe section is shown in Figure 4.

This pipe section has an inner surface (11) defining an inner circumference, an outer surface (12) defining an outer circumference, with a longitudinal axis which is substantially perpendicular to the planes of the inner and outer circumferences, comprising; a wound mat (10) comprising a matrix of fibres impregnated with an aerogel, xerogel or cryogel, having a first major face (2) and a second major face (3) opposing the first major face (2), the mat forming a continuous roll having at least a first layer and a second layer between the inner and outer surfaces (11,12) of the pipe section; an adhesive (8) at the interface (21) between the first major face (2) of the part of the mat forming the first layer and the second major face (3) of the part of the mat forming the second layer; and a split (20), extending substantially radially between the inner surface (11) and the outer surface (12) and extending in a direction substantially parallel to the longitudinal axis of the pipe section.

Depending upon which direction the mat (1) is wound to form the wound mat (10), the second layer may be inside or outside the first layer. In other words, the first major face (2) of the mat could face inwards or outwards, depending on the direction in which the mat (1) is wound.

The embodiment shown comprises a facing material (19) applied to the outer surface (12) of the wound mat (10). As described in relation to the method of the invention the facing material (19) is preferably glass fibre-reinforced aluminium foil.

The pipe section of the invention preferably has an inner circumference with a diameter of no more than 100mm, more preferably no more than 70mm, most preferably, no more than 60mm.

It is also preferred that the pipe section has at least 2 and more preferably at least 3 complete layers. Usually, it has no more than 4 complete layers.

Furthermore, each of the additional features described above in relation to the method of the invention can also be used, where applicable, with respect to the product of the invention.

## Claims

1. A method for making a pipe section comprising;
providing a mat (1) formed of a fibre matrix impregnated with an aerogel, xerogel or cryogel, the mat having a first major face (2), a second major face (3) opposing the first major face, a first edge (4) defining a longitudinal direction, a second edge (5) substantially parallel to the first edge, a third edge (6) defining a transverse direction that is substantially perpendicular to the longitudinal direction and a fourth edge (7) substantially parallel to the third edge;
applying an adhesive (8) to the first major face (2);
winding the mat around a mandrel (13) to provide a wound mat (10) having an inner surface defining an inner circumference and an outer surface defining an outer circumference and a longitudinal axis which is substantially perpendicular to the planes of the inner and outer circumferences and substantially parallel to the transverse direction of the mat; and
slicing the wound mat (10) substantially radially between the outer surface and the inner surface to provide a cut extending in a direction substantially parallel to the longitudinal axis;
wherein the method additionally comprises providing as a component of the pipe section a layer that comprises mineral wool fibres and that does not comprise aerogel, xerogel or cryogel.

2. The method of claim 1, further comprising applying a facing material (19) to the outer surface (12).

3. The method of claim 2, wherein the facing material (19) is a glass fibre-reinforced aluminium foil.

4. The method of any one of claims 1-3, wherein the fibre matrix comprises polymer fibres, mineral wool fibres, ceramic fibres or mixtures thereof.

5. The method of any one of claims 1-4, wherein the diameter of the inner circumference of the wound mat (10) is not more than 100mm, preferably not more than 70mm, more preferably not more than 60mm.

6. The method of any one of claims 1-5, wherein the mat (1) has a thickness perpendicular to the longitudinal and transverse directions of from 3mm to 10mm, preferably from 3mm to 6mm.

7. The method of any one of claims 1-6, wherein the step of winding the mat on the mandrel (13) comprises rotating the mandrel through at least 2, preferably at least 3, complete rotations.

8. The method of any one of claims 1-7, wherein the step of winding the mat on the mandrel (13) comprises rotating the mandrel through no more than 4 complete rotations.

9. The method of any one of claims 1-8, wherein the mat (1) is formed of a fibre matrix impregnated with a silica-containing aerogel.

10. A pipe section having an inner surface (11) defining an inner circumference, an outer surface (12) defining an outer circumference, with a longitudinal axis which is substantially perpendicular to the planes of the inner and outer circumferences, comprising;
a wound mat (10) comprising a matrix of fibres impregnated with an aerogel, xerogel or cryogel, having a first major face (2) and a second major face (3) opposing the first major face, the mat forming a continuous roll having at least a first layer and a second layer between the inner and outer surfaces (11, 12) of the pipe section;
an adhesive (8) at the interface (21) between the first major face (2) of the part of the mat forming the first layer and the second major face (3) of the part of the mat forming the second layer;
a split (20), extending substantially radially between the inner surface (11) and the outer surface (12) and extending in a direction substantially parallel to the longitudinal axis of the pipe section;
wherein the pipe section additionally has a layer that comprises mineral wool fibres and that does not comprise aerogel, xerogel or cryogel.

11. A pipe section according to claim 10, further comprising a facing material (19) applied to the outer surface (12) of the pipe section.

12. A pipe section according to claim 11, wherein the facing material (19) is glass fibre reinforced aluminium foil.

13. A pipe section according to any one of claim 11 or claim 12, wherein the fibre matrix comprises polymer fibres, mineral wool fibres, ceramic fibres or mixtures thereof.

14. A pipe section according to any one of claims 11-13, wherein the diameter of the inner circumference is not more than 100mm, preferably not more than 70mm, more preferably not more than 60mm.

15. A pipe section according to any one of claims 11-14, wherein the continuous roll has at least 2, preferably at least 3 complete layers.

16. A pipe section according to any one of claims 11-15, wherein the continuous roll has no more than 4 complete layers.

17. A pipe section according to any one of claims 11-16, wherein the fibre matrix is impregnated with a silica-containing aerogel.

18. A pipe section according to any one of claims 11-17, wherein each layer of the wound mat (10) has a thickness of from 3mm to 10mm, preferably from 3mm to 6mm.

## Patentansprüche

1. Verfahren zum Herstellen eines Rohrabschnitts, das Folgendes umfasst:
Bereitstellen einer Matte (1), die aus einer mit einem Aerogel, Xerogel oder Kryogel imprägnierten Fasermatrix ausgebildet ist, wobei die Matte eine erste Hauptfläche (2), eine der ersten Hauptfläche gegenüberliegende zweite Hauptfläche (3), einen ersten Rand (4), der eine Längsrichtung definiert, einen zweiten Rand (5), der im Wesentlichen parallel zu dem ersten Rand ist, einen dritten Rand (6), der eine Querrichtung definiert, die im Wesentlichen senkrecht zu der Längsrichtung ist, und einen vierten Rand (7), der im Wesentlichen parallel zu dem dritten Rand ist, aufweist;
Auftragen eines Klebstoffs (8) auf die erste Hauptfläche (2);
Wickeln der Matte um einen Dorn (13), um eine gewickelte Matte (10) bereitzustellen, die eine Innenoberfläche, die einen Innenumfang definiert, und eine Außenoberfläche, die einen Außenumfang definiert, und eine Längsachse, die im Wesentlichen senkrecht zu den Ebenen des Innen- und des Außenumfangs und im Wesentlichen parallel zu der Querrichtung der Matte ist, aufweist; und
Schneiden der gewickelten Matte (10) im Wesentlichen radial zwischen der Außenoberfläche und der Innenoberfläche, um einen Schnitt bereitzustellen, der sich in einer Richtung erstreckt, die im Wesentlichen parallel zu der Längsachse ist;
wobei das Verfahren zusätzlich das Bereitstellen einer Schicht als einen Bestandteil des Rohrabschnitts umfasst, die Mineralwollfasern umfasst und die kein Aerogel, Xerogel oder Kryogel umfasst.

2. Verfahren nach Anspruch 1, das ferner das Auftragen eines Verkleidungsmaterials (19) auf die Außenoberfläche (12) umfasst.

3. Verfahren nach Anspruch 2, wobei das Verkleidungsmaterial (19) eine glasfaserverstärkte Aluminiumfolie ist.

4. Verfahren nach einem der Ansprüche 1-3, wobei die Fasermatrix Polymerfasern, Mineralwollfasern, Keramikfasern oder Gemische davon umfasst.

5. Verfahren nach einem der Ansprüche 1-4, wobei der Durchmesser des Innenumfangs der gewickelten Matte (10) nicht mehr als 100 mm, bevorzugt nicht mehr als 70 mm, stärker bevorzugt nicht mehr als 60 mm, beträgt.

6. Verfahren nach einem der Ansprüche 1-5, wobei die Matte (1) eine Dicke senkrecht zu der Längs- und der Querrichtung von 3 mm bis 10 mm, bevorzugt von 3 mm bis 6 mm, aufweist.

7. Verfahren nach einem der Ansprüche 1-6, wobei der Schritt des Wickelns der Matte auf den Dorn (13) ein Drehen des Dorns um wenigstens 2, bevorzugt wenigstens 3, vollständige Umdrehungen umfasst.

8. Verfahren nach einem der Ansprüche 1-7, wobei der Schritt des Wickelns der Matte auf den Dorn (13) das Drehen des Dorns um nicht mehr als 4 vollständige Umdrehungen umfasst.

9. Verfahren nach einem der Ansprüche 1-8, wobei die Matte (1) aus einer mit einem Siliciumdioxid enthaltenden Aerogel imprägnierten Fasermatrix ausgebildet ist.

10. Rohrabschnitt, der eine Innenoberfläche (11), die einen Innenumfang definiert, eine Außenoberfläche (12), die einen Außenumfang definiert, aufweist mit einer Längsachse, die im Wesentlichen senkrecht zu den Ebenen des Innen- und des Außenumfangs ist, der Folgendes umfasst;
eine gewickelte Matte (10), die eine mit einem Aerogel, Xerogel oder Kryogel imprägnierte Fasermatrix umfasst, die eine erste Hauptfläche (2) und eine der ersten Hauptfläche gegenüberliegende zweite Hauptfläche (3) aufweist, wobei die Matte eine kontinuierliche Rolle ausbildet, die wenigstens eine erste Schicht und eine zweite Schicht zwischen der Innen- und der Außenoberfläche (11, 12) des Rohrabschnitts aufweist;
einen Klebstoff (8) an der Grenzfläche (21) zwischen der ersten Hauptfläche (2) des Teils der Matte, der die erste Schicht ausbildet, und der zweiten Hauptfläche (3) des Teils der Matte, der die zweite Schicht ausbildet;
einen Schlitz (20), der sich im Wesentlichen radial zwischen der Innenoberfläche (11) und der Außenoberfläche (12) erstreckt und sich in einer Richtung erstreckt, die im Wesentlichen parallel zu der Längsachse des Rohrabschnitts ist;
wobei der Rohrabschnitt zusätzlich eine Schicht aufweist, die Mineralwollfasern umfasst und die kein Aerogel, Xerogel oder Kryogel umfasst.

11. Rohrabschnitt nach Anspruch 10, das ferner ein Verkleidungsmaterial (19), das auf die Außenoberfläche (12) des Rohrabschnitts aufgetragen wird, umfasst.

12. Rohrabschnitt nach Anspruch 11, wobei das Verkleidungsmaterial (19) glasfaserverstärkte Aluminiumfolie ist.

13. Rohrabschnitt nach einem der Ansprüche 11 oder 12, wobei die Fasermatrix Polymerfasern, Mineralwollfasern, Keramikfasern oder Gemische davon umfasst.

14. Rohrabschnitt nach einem der Ansprüche 11-13, wobei der Durchmesser des Innenumfangs nicht mehr als 100 mm, bevorzugt nicht mehr als 70 mm, stärker bevorzugt nicht mehr als 60 mm, beträgt.

15. Rohrabschnitt nach einem der Ansprüche 11-14, wobei die kontinuierliche Rolle wenigstens 2, bevorzugt wenigstens 3, vollständige Schichten aufweist.

16. Rohrabschnitt nach einem der Ansprüche 11-15, wobei die kontinuierliche Rolle nicht mehr als 4 vollständige Schichten aufweist.

17. Rohrabschnitt nach einem der Ansprüche 11-16, wobei die Fasermatrix mit einem Siliciumdioxid enthaltenden Aerogel imprägniert ist.

18. Rohrabschnitt nach einem der Ansprüche 11-17, wobei jede Schicht der gewickelten Matte (10) eine Dicke von 3 mm bis 10 mm, bevorzugt von 3 mm bis 6 mm, aufweist.

## Revendications

1. Procédé de fabrication d'une section de tuyau comprenant ;
la fourniture d'un mat (1) formé d'une matrice fibreuse imprégnée d'un aérogel, xérogel ou cryogel, le mat présentant une première face principale (2), une seconde face principale (3) opposée à la première face principale, un premier bord (4) définissant une direction longitudinale, un deuxième bord (5) sensiblement parallèle au premier bord, un troisième bord (6) définissant une direction transversale qui est sensiblement perpendiculaire à la direction longitudinale et un quatrième bord (7) sensiblement parallèle au troisième bord ;
l'application d'un adhésif (8) sur la première face principale (2) ;
l'enroulement du mat autour d'un mandrin (13) pour fournir un mat enroulé (10) présentant une surface interne définissant une circonférence interne et une surface externe définissant une circonférence externe et un axe longitudinal qui est sensiblement perpendiculaire aux plans des circonférences interne et externe et sensiblement parallèle à la direction transversale du mat ; et
le tranchage du mat enroulé (10) sensiblement radialement entre la surface externe et la surface interne pour fournir une coupe s'étendant dans une direction sensiblement parallèle à l'axe longitudinal ;
dans lequel le procédé comprend en outre la fourniture en tant que composant de la section de tuyau d'une couche qui comprend des fibres de laine minérale et qui ne comprend pas d'aérogel, de xérogel ou de cryogel.

2. Procédé selon la revendication 1, comprenant en outre l'application d'un matériau de revêtement (19) sur la surface externe (12).

3. Procédé selon la revendication 2, dans lequel le matériau de revêtement (19) est une feuille d'aluminium renforcée par des fibres de verre.

4. Procédé selon l'une quelconque des revendications 1 à 3, dans lequel la matrice fibreuse comprend des fibres polymères, des fibres de laine minérale, des fibres céramiques ou des mélanges de celles-ci.

5. Procédé selon l'une quelconque des revendications 1 à 4, dans lequel le diamètre de la circonférence interne du mat enroulé (10) ne dépasse pas 100 mm, de préférence pas plus de 70 mm, de préférence pas plus de 60 mm.

6. Procédé selon l'une quelconque des revendications 1 à 5, dans lequel le mat (1) présente une épaisseur perpendiculaire aux directions longitudinale et transversale de 3 mm à 10 mm, de préférence de 3 mm à 6 mm.

7. Procédé selon l'une quelconque des revendications 1 à 6, dans lequel l'étape d'enroulement du mat sur le mandrin (13) comprend la rotation du mandrin sur au moins 2, de préférence au moins 3, rotations complètes.

8. Procédé selon l'une quelconque des revendications 1 à 7, dans lequel l'étape d'enroulement du mat sur le mandrin (13) comprend la rotation du mandrin sur pas plus de 4 rotations complètes.

9. Procédé selon l'une quelconque des revendications 1 à 8, dans lequel le mat (1) est formé d'une matrice fibreuse imprégnée d'un aérogel contenant de la silice.

10. Section de tuyau présentant une surface interne (11) définissant une circonférence interne, une surface externe (12) définissant une circonférence externe, avec un axe longitudinal qui est sensiblement perpendiculaire aux plans des circonférences interne et externe, comprenant ;
un mat enroulé (10) comprenant une matrice fibreuse imprégnée d'un aérogel, xérogel ou cryogel, présentant une première face principale (2) et une seconde face principale (3) opposée à la première face principale, le mat formant un rouleau continu présentant au moins une première couche et une seconde couche entre les surfaces interne et externe (11, 12) de la section de tuyau ;
un adhésif (8) au niveau de l'interface (21) entre la première face principale (2) de la partie du mat formant la première couche et la seconde face principale (3) de la partie du mat formant la seconde couche ;
une fente (20), s'étendant sensiblement radialement entre la surface interne (11) et la surface externe (12) et s'étendant dans une direction sensiblement parallèle à l'axe longitudinal de la section de tuyau ;
dans laquelle la section de tuyau présente en outre une couche qui comprend des fibres de laine minérale et qui ne comprend pas d'aérogel, de xérogel ou de cryogel.

11. Section de tuyau selon la revendication 10, comprenant en outre un matériau de revêtement (19) appliqué sur la surface externe (12) de la section de tuyau.

12. Section de tuyau selon la revendication 11, dans laquelle le matériau de revêtement (19) est une feuille d'aluminium renforcée par des fibres de verre.

13. Section de tuyau selon l'une quelconque des revendications 11 ou 12, dans laquelle la matrice fibreuse comprend des fibres polymères, des fibres de laine minérale, des fibres céramiques ou des mélanges de celles-ci.

14. Section de tuyau selon l'une quelconque des revendications 11 à 13, dans laquelle le diamètre de la circonférence interne n'est pas supérieur à 100 mm, de préférence pas plus de 70 mm, de préférence pas plus de 60 mm.

15. Section de tuyau selon l'une quelconque des revendications 11 à 14, dans laquelle le rouleau continu présente au moins 2, de préférence au moins 3 couches complètes.

16. Section de tuyau selon l'une quelconque des revendications 11 à 15, dans laquelle le rouleau continu ne présente pas plus de 4 couches complètes.

17. Section de tuyau selon l'une quelconque des revendications 11 à 16, dans laquelle la matrice fibreuse est imprégnée d'un aérogel contenant de la silice.

18. Section de tuyau selon l'une quelconque des revendications 11 à 17, dans laquelle chaque couche du mat enroulé (10) présente une épaisseur de 3 mm à 10 mm, de préférence de 3 mm à 6 mm.
